# FASCICULE DE BREVET EUROPEEN

(11) **EP 2 861 499 B1**
(45) Date de publication et mention de la délivrance du brevet: **26.04.2017**
(21) Numéro de dépôt: 13733353.0
(22) Date de dépôt: 06.06.2013
(51) Int. Cl.: B65D 1/02, B65D 21/02, B65D 79/00

(54) **RÉCIPIENT EMPILABLE AYANT UNE ÉPAULE À TROIS POSITIONS STABLES**
STAPELBARER BEHÄLTER MIT EINER SCHULTER MIT DREI STABILEN STELLUNGEN
STACKABLE CONTAINER INCLUDING A SHOULDER WITH THREE STABLE POSITIONS

(30) Priorité: 15.06.2012 FR 1255648
(43) Date de publication de la demande: 22.04.2015
(73) Titulaire: Sidel Participations, 76930 Octeville-sur-Mer (FR)
(72) Inventeur: DERRIEN, Mikael, F-76930 Octeville Sur Mer (FR); LETERC, François, F-76930 Octeville Sur Mer (FR); PENET, Laurent, F-76930 Octeville Sur Mer (FR); PROTAIS, Pierrick, F-76930 Octeville Sur Mer (FR)
(74) Mandataire: Siloret, Patrick
(86) Numéro de dépôt international: PCT/FR2013/051288
(87) Numéro de publication internationale: WO 2013/186463

(56) Documents cités:
- EP-A2- 0 618 142
- WO-A2-2007/127337
- WO-A2-2009/027224
- FR-A1- 2 778 167
- FR-A1- 2 782 499
- US-A- 5 206 037
- US-A1- 2006 260 971
- US-A1- 2007 114 200

## Description

L'invention a trait aux récipients, et plus particulièrement aux récipients empilables, comprenant à cet effet un fond et un col sensiblement complémentaires, de manière à permettre leur emboîtement mutuel.

La production de récipients empilables est ancienne. Le brevet américain US 2 077 027 décrit un récipient empilable, qui comprend un corps et une épaule tronconique rapportée et fixée sur le corps par un bord replié.

L'empilement de ce type de récipient est naturellement stable, mais cette stabilité repose en grande partie sur le matériau (métallique) dans lequel est fabriqué le récipient.

Il est difficile d'obtenir une telle stabilité lorsque le récipient est obtenu par soufflage (ou étirage soufflage) à partir d'une ébauche (notamment une préforme) en matière plastique telle que PET (polyéthylène téréphtalate). En effet, d'une part, les matières plastiques sont naturellement malléables, et d'autre part, les exigences du marché font tendre la production vers un allègement des récipients.

Le document EP 0 698 557 décrit un récipient empilable en matière plastique, dont le fond est conformé de manière sensiblement complémentaire au col pour permettre l'empilement. A cet effet, le fond et l'épaule du récipient sont munis sur leur périphérie de surfaces planes d'appui, et le fond est en outre pourvu d'une portion creuse de réception du col d'un récipient sous-jacent.

Les documents FR 2 778 167, WO 2009/027224, US 2006/0260971 et US 2007/114200 décrivent des récipients empilables. En particulier le document FR 2 778 167 décrit un récipient selon le préambule de la revendication 1. La fabrication d'un tel récipient nécessite, pour la réalisation du fond, une quantité substantielle de matière, nécessaire pour conférer au fond une rigidité suffisante, susceptible de conférer à l'ensemble du récipient une bonne tenue mécanique et une bonne stabilité lors de son empilement. De même, une quantité suffisante de matière est nécessaire à la bonne soufflabilité du fond (c'est-à-dire à sa capacité à être correctement formé). A contrario, un allègement inconsidéré du récipient notamment au niveau du fond, est nuisible à la tenue mécanique du récipient et à la stabilité de son empilement.

On voit qu'il est difficile d'obtenir un bon compromis entre la stabilité d'empilement et la légèreté d'un récipient en matière plastique.

C'est pourtant un tel objectif que vise l'invention.

A cet effet, il est proposé un récipient obtenu par soufflage ou étirage-soufflage à partir d'une ébauche en matière plastique, qui comprend un corps, une épaule dans le prolongement du corps à une extrémité supérieure de celui-ci, et un col dans le prolongement de l'épaule, l'épaule étant articulée entre deux positions stables, à savoir une position déployée dans laquelle l'épaule fait saillie du corps, et une position rétractée dans laquelle l'épaule est au moins partiellement rentrée dans le corps, l'épaule étant articulée pour pouvoir adopter, outre les deux positions stables précitées, une troisième position stable, intermédiaire entre celles-ci, l'épaule comprenant une section périphérique et une section centrale, une première articulation étant définie à une jonction entre la section périphérique et le corps, une deuxième articulation étant définie à une jonction entre la section périphérique et la section centrale, la section périphérique et le corps définissent à leur jonction, dans la position rétractée ou dans la position intermédiaire, une crête en saillie axiale, une troisième articulation étant définie par la jonction entre la section centrale et une section sous col, le fond du récipient comprenant en son centre une voûte définissant une réserve en creux et à sa périphérie un décroché complémentaire de la crête.

On connaît, certes, des récipients à épaule mobile - cf. par exemple le brevet européen EP 1 870 345 et la demande internationale WO 02/38360 -, mais il s'agit de tubes à fond aplati soudé, que l'on souhaite pouvoir poser en station debout retournée, ce que permet une position complètement rétractée de l'épaule.

En l'espèce, la problématique est très différente puisqu'il s'agit de permettre un empilement stable du récipient. La position rétractée, dans laquelle l'empilement peut être réalisé, permet de diminuer la hauteur d'épaule, et par conséquent le volume d'accueil ménagé dans le fond. Il est ainsi possible de diminuer la quantité de matière nécessaire pour former le fond, ce qui permet d'alléger le récipient sans sacrifier la stabilité.

En outre, l'épaule peut être placée dans sa position rétractée après remplissage et bouchage, ce qui met le contenu sous pression et accroît la rigidité du récipient. Il en résulte alors une stabilité accrue de l'empilement.

Diverses caractéristiques supplémentaires peuvent être prévues, seules ou en combinaison :
- en position intermédiaire, la section périphérique et la section centrale s'étendent respectivement en déclinaison et en inclinaison ;
- en position rétractée, la section périphérique et la section centrale s'étendent en déclinaison ;
- en position déployée, la section périphérique et la section centrale s'étendent en inclinaison ;
- en position rétractée, le col ne dépasse pas de la crête ou en dépasse partiellement ;
- en position intermédiaire, le col dépasse complètement de la crête ;
- en position rétractée, le col dépasse partiellement de la crête et la voute présente une forme et des dimensions telles que, lorsque deux récipients sont empilés, ladite réserve est susceptible d'accueillir la partie de col qui dépasse partiellement de la crête du récipient sous-jacent lorsque son épaule est dans ladite position rétractée ;
- le corps est cintré au voisinage de l'épaule ;
- le corps est muni d'au moins une zone déformable ;
- le corps est raidi à l'exception de la zone ou des zones déformable(s) ;
- le corps présente une superposition de raidisseurs annulaires.

D'autres objets et avantages de l'invention apparaîtront à la lumière de la description d'un mode préféré de réalisation, faite ci-après en référence aux dessins annexés dans lesquels :
- la figure 1 est une vue en perspective illustrant un récipient dans une position intermédiaire de l'épaule, venue de formage ;
- la figure 2 est une vue similaire à la figure 1, montrant le récipient dans une position rétractée de l'épaule ;
- la figure 3 est une vue similaire aux figures 1 et 2, montrant le récipient dans une position déployée de l'épaule ;
- la figure 4 est une vue en coupe du récipient dans la position intermédiaire de l'épaule ;
- la figure 5 est une vue de détail de l'épaule du récipient selon l'encart V de la figure 4 ;
- la figure 6 est une vue en coupe du récipient dans une position rétractée de l'épaule ;
- la figure 7 est une vue de détail de l'épaule du récipient selon l'encart VII de la figure 6 ;
- la figure 8 est une vue en coupe du récipient dans la position déployée de l'épaule ;
- la figure 9 est une vue de détail de l'épaule du récipient selon l'encart IX de la figure 8 ;
- la figure 10 est une vue en coupe montrant la superposition de deux récipients, le récipient inférieur étant dans la position rétractée de l'épaule.

On a représenté sur les figures un récipient **1** obtenu par soufflage (ou étirage soufflage) à partir d'une ébauche en matière plastique. Cette ébauche est par exemple une préforme, mais il peut également s'agir d'un récipient intermédiaire ayant subi une première opération transitoire de soufflage.

Le récipient **1** comprend un corps **2** de forme cylindrique qui s'étend selon un axe principal X. Le corps **2** n'est pas nécessairement symétrique de révolution autour de son axe X. Il pourrait être à section circulaire mais, dans l'exemple illustré, il est à section carrée (arrondie aux coins).

Le récipient **1** comprend également une épaule **3** dans le prolongement du corps **2** à une extrémité supérieure de celui-ci, un col **4** dans le prolongement de l'épaule **3**, et un fond **5** dans le prolongement du corps **2** à une extrémité inférieure. Le col **4** présente, au voisinage de sa jonction avec l'épaule **3**, une collerette **6** permettant la suspension de l'ébauche à diverses étapes de fabrication. Entre la collerette **6** et l'épaule **3**, le récipient **1** présente une section **7** sous col, cylindrique de révolution autour de l'axe X principal, ménageant un espace suffisant pour accueillir un organe (tel qu'une pince) de préhension du récipient **1**.

Comme cela est visible sur les figures, l'épaule **3** comprend une section **8** périphérique, sous forme d'une bande relativement étroite de matière qui s'étend depuis un bord externe, qui définit une première articulation **9**, externe, de l'épaule **3** par rapport au corps **2**, à une jonction avec le corps **2** à l'extrémité supérieure de celui-ci jusqu'à un bord interne concentrique du bord externe, lequel bord interne définit une deuxième articulation **10**, interne, d'une section **11** centrale de l'épaule **3** par rapport à la section **8** périphérique.

La section **11** centrale de l'épaule **3** est tronconique et s'étend depuis l'articulation **10** interne de la section **8** périphérique jusqu'à la section **7** sous col.

La jonction entre la section **11** centrale de l'épaule **3** et la section **7** sous col définit une troisième articulation **12**, centrale, de l'épaule **3** par rapport au col **4**.

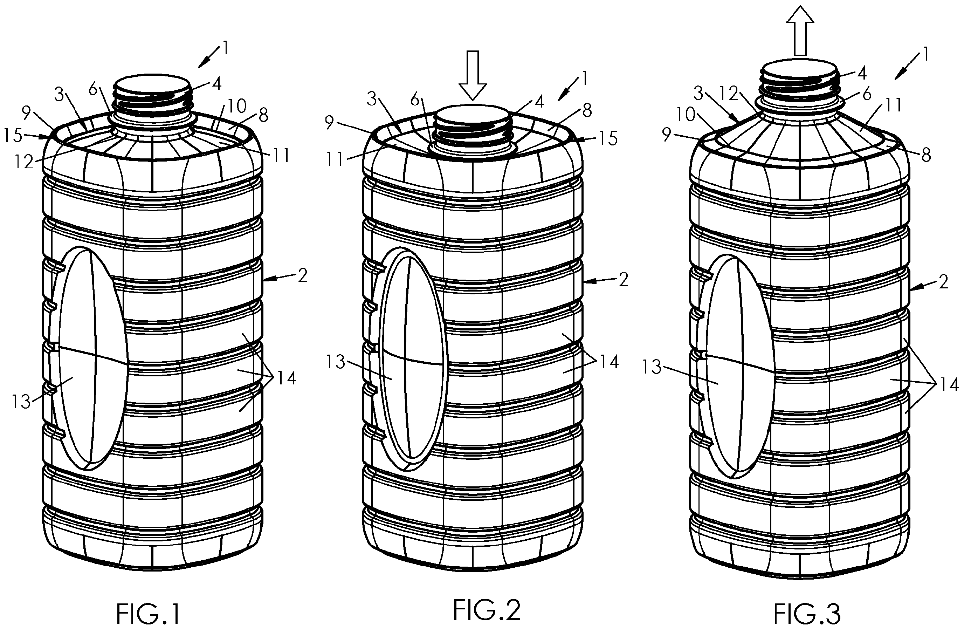

Ces articulations **9**, **10**, **12** confèrent à l'épaule **3** la faculté d'adopter trois positions stables :
- une position rétractée (figures 2, 6, 7, 10) dans laquelle l'épaule **3** est au moins partiellement rentrée dans le corps **2**, la section **8** périphérique et la section **11** centrale s'étendant toutes deux en déclinaison, c'est-à-dire que leur conicité pointe en direction du fond **5** (vers le bas) ;
- une position déployée (figures 3, 8, 9) dans laquelle l'épaule **3** fait saillie du corps **2**, la s.ection **8** périphérique et la section **11** centrale s'étendant toutes deux en inclinaison, c'est-à-dire que leur conicité pointe en direction du col **4** (vers le haut) ;
- une position intermédiaire (figure 1) entre la position rétractée et la position déployée, la section **8** périphérique s'étendant en déclinaison (c'est-à-dire que sa conicité pointe vers le bas) tandis que la section **11** centrale s'étend en inclinaison (c'est-à-dire que sa conicité pointe vers le haut).

La position intermédiaire (figure 1) est venue de formage. En d'autres termes, c'est dans cette position que le récipient **1** est formé. C'est également dans cette position que le récipient **1** est rempli et bouché.

A partir de cette position intermédiaire, et une fois le récipient **1** rempli et bouché, l'épaule **3** est placée en position rétractée (par des moyens mécaniques), comme suggéré par la flèche sur la figure 2.

Le passage de l'épaule **3** de la position intermédiaire à la position rétractée s'effectue par retournement de la section **11** centrale autour de l'articulation **10** interne, tandis que l'orientation de la section **8** périphérique demeure sensiblement inchangée et que le col **4** est animé d'un mouvement axial de piston dirigé vers le bas, permis par un pivotement de la section **11** centrale par rapport au col **4** autour de l'articulation **12** centrale.

Le récipient **1** étant rempli, la rétraction de l'épaule **3** provoque une mise sous pression du contenu du récipient **1**. Cette mise sous pression peut être partiellement ou complètement compensée. A cet effet, le corps **2** peut être pourvu d'au moins une zone **13** déformable. Dans l'exemple illustré, le corps **2** est muni d'une paire de zones **13** déformables diamétralement opposées.

Le ou chaque zone **13** absorbant la déformation due aux différences de pression régnant dans le récipient **1**, le corps **2** peut par ailleurs (à l'exception des éventuelles zones déformables) être raidi, comme dans l'exemple illustré où le corps **2** présente une superposition de raidisseurs **14** annulaires, au bénéfice de la rigidité structurelle du récipient **1** lorsqu'il est empilé.

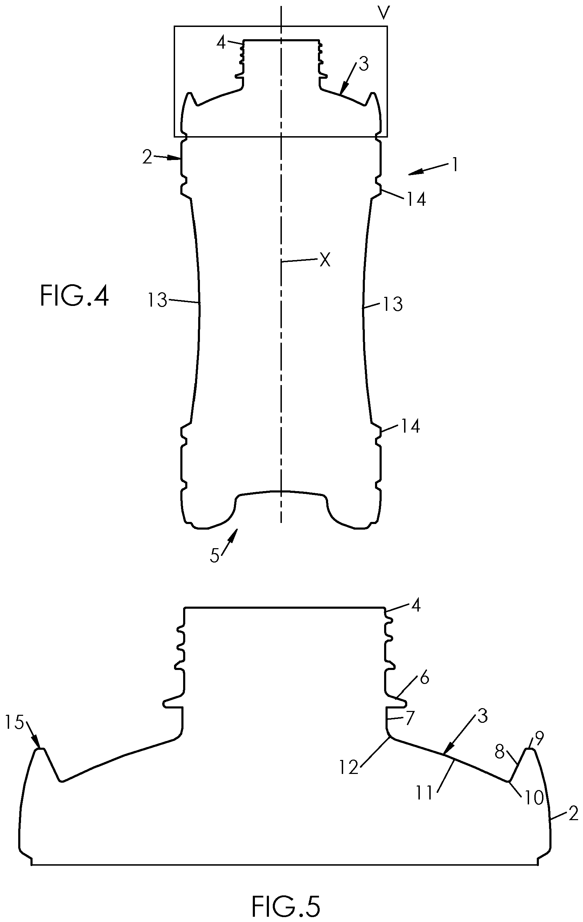

Dans cette configuration, le récipient **1** est formé (avec l'épaule **3** en position intermédiaire) avec la (ou chaque) zone **13** dans une configuration plate ou éventuellement creuse, comme illustré sur les figures 1 et 4.

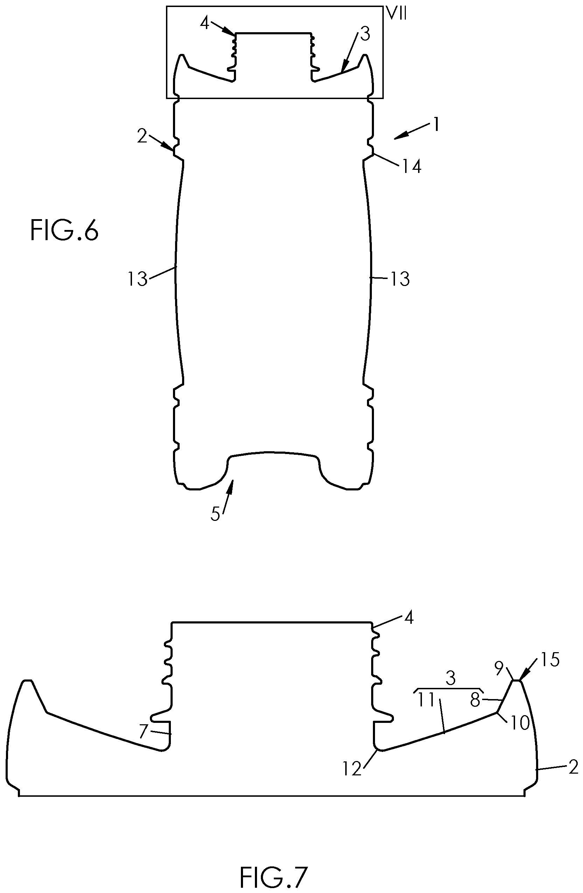

Lors de la rétraction de l'épaule **3**, la zone **13** se déforme pour adopter une configuration plus ou moins bombée vers l'extérieur du récipient **1**, comme illustré sur les figures 2 et 6.

C'est dans la position rétractée de l'épaule **3** que le récipient **1** est empilé en vue de permettre son conditionnement (par exemple une palettisation) et son transport groupé.

Comme cela est visible notamment sur la figure 7, la section **8** périphérique et le corps **2** définissent à leur jonction, c'est-à-dire au niveau de l'articulation **9** externe, une crête **15** en saillie axiale.

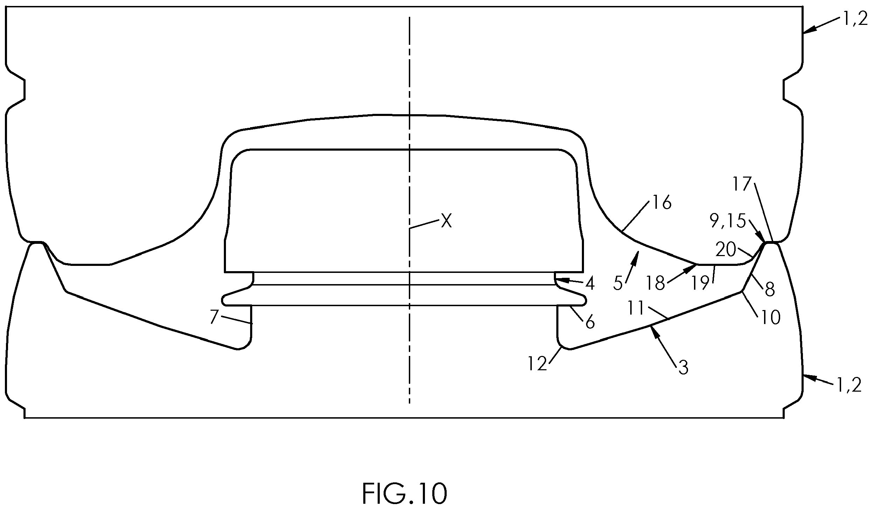

En position rétractée, le col **4** peut ne dépasser que partiellement de la crête **15**, comme illustré sur les figures 7 et 10 où la collerette **6** est située sous le niveau de la crête **15**, seule une partie supérieure du col **4** dépassant de la crête **15**, de sorte que le col **4** forme une saillie de faible extension axiale au-delà du corps **2**. En variante, le col **4** ne dépasse pas du tout de la crête **15**. Dans ce cas, le buvant défini par l'extrémité supérieure du col **4** s'étend sous le niveau de la crête **15**.

Comme on le voit sur les figures, et plus précisément sur la figure 10, lorsque le col **4** dépasse partiellement de la crête **15** en position rétractée, le fond **5** du récipient **1** est alors conformé pour pouvoir accueillir la partie qui dépasse de la crête **15**, du col **4** d'un récipient **1** identique sous-jacent en position rétractée.

Plus précisément, le fond **5** présente, en son centre, une voûte **16** définissant une réserve en creux dont la forme et les dimensions sont telles qu'elle est susceptible d'accueillir la partie de col **4** d'un récipient sous-jacent dépassant partiellement de la crête **15**, et, à sa périphérie, un décroché **17** complémentaire de la crête **15** du récipient **1** sous-jacent.

Dans la variante où le col **4** ne dépasse pas du tout de la crête **15** en position rétractée, la présence d'une réserve en creux susceptible d'accueillir une partie de col **4** d'un récipient sous-jacent n'est plus nécessaire, mais le fond **5** peut néanmoins conserver une voute **16** de dimensions réduites par rapport au cas précédent et, à sa périphérie, un décroché **17** complémentaire de la crête **15** du récipient **1** sous-jacent, cet agencement permettant que le fond demeure stable lorsque le récipient **1** est en position debout.

Selon un mode particulier de réalisation illustré sur les figures, le fond **5** présente entre la voûte **16** et le décroché **17** une assise **18** annulaire définissant un plan **19** de pose permettant la station debout du récipient **1** sur un support plat (par exemple une table). L'assise **18** définit extérieurement un congé **20** de raccordement entre le décroché **17** et le plan **19** de pose.

Une telle configuration du fond **5** permet l'empilement des récipients **1**, comme illustré sur la figure 10. Comme on le voit sur cette figure, le récipient **1** peut être emboîté sur un récipient **1** sous-jacent, la crête **15** de ce dernier venant se loger dans le décroché **17** du récipient **1** supérieur.

Le mouvement mutuel transversal des récipients **1** est bloqué par la coopération du congé **20** du récipient **1** supérieur dans la section 8 périphérique en déclinaison du récipient **1** sous-jacent.

D'autres configurations peuvent être envisagées pour permettre l'empilement des récipients. En particulier, le fond pourrait être configuré de sorte à permettre un emboîtement par l'extérieur de la crête, et non par l'intérieur comme décrit ci-dessus.

Compte tenu de la faible saillie (ou de l'absence de saillie) axiale du col **4** dans la position rétractée du récipient **1** sous-jacent, la voûte **16** présente une faible saillie axiale vers l'intérieur du récipient **1**, au bénéfice d'une économie substantielle de matière.

On notera que, comme illustré sur la figure 5, en position intermédiaire (venue de formage), le col **4** dépasse complètement de la crête **15**. Plus précisément, la collerette **6** (mais également, dans l'exemple représenté, la section **7** sous col) s'étend au-delà de la crête **15**. Cela rend possible la manutention du récipient **1** au moyen d'organes de préhension venant agripper la section **7** sous col.

Le passage de l'épaule **3** de la position rétractée à la position déployée se fait par retournement conjoint de la section **8** périphérique autour de l'articulation **9** externe, et de la section **11** centrale autour de l'articulation **10** interne. Ainsi, la section **8** périphérique pivote par rapport au corps **2** autour de l'articulation **9** externe ; la section **11** centrale pivote par rapport à la section **8** périphérique autour de l'articulation **10** interne, et par rapport au col **4** autour de l'articulation **12** centrale. Le col **4** est animé d'un mouvement axial de piston dirigé vers le haut.

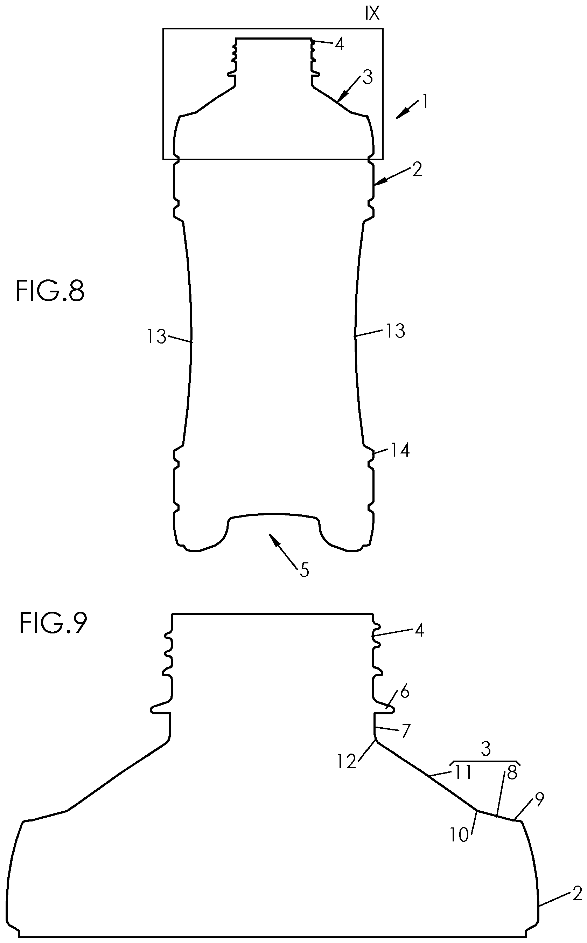

Ce retournement de l'épaule **3** peut être provoqué par une pression réalisée manuellement par l'utilisateur sur le corps **2** du récipient **1**, par exemple, lorsqu'elles existent, sur les zones **13** déformables, qui sous la pression passent de leur configuration bombée (adoptée en position rétractée de l'épaule **3**) à une configuration creuse (figures 3 et 8), absorbant ainsi la dépression due à l'augmentation du volume interne du récipient **1** accompagnant le retournement de l'épaule **3**.

Le récipient **1** qui vient d'être décrit présente les avantages suivants, grâce à la triple position de l'épaule **3**.

Premièrement, la mise sous pression du récipient **1** due au passage de la position intermédiaire (venue de formage) de l'épaule **3** à la position rétractée provoque une surpression qui accroît la rigidité structurelle du récipient **1** dans cette deuxième position, au bénéfice de la tenue du récipient **1** empilé.

Deuxièmement, grâce à la faible excroissance formée par le col **4** en position rétractée (utilisée pour l'empilement), le fond **5** peut être de faible extension axiale, et requiert par conséquent une quantité de matière relativement modeste, au bénéfice de la légèreté du récipient **1**.

Troisièmement, la crête **15** offre une assise solide au récipient **1** supérieur, et assure un emboîtement rigide, au bénéfice de la stabilité de l'empilement.

Quatrièmement, le retournement de l'épaule **3** lors de son déploiement permet d'augmenter le volume utile du récipient **1**. Il en résulte un abaissement du niveau du contenu, ce qui minimise le risque de débordement fréquemment rencontré sur les récipients allégés, en raison de la pression exercée par l'utilisateur sur le corps lors du débouchage. En outre, lorsque le col est fileté, il peut être avantageux de rainurer le filetage pour accélérer la mise du volume sous col à la pression atmosphérique et ainsi favoriser la chute du niveau du contenu à l'ouverture.

Comme on le voit sur les figures, et plus particulièrement sur la figure 10, le corps **2** peut être cintré (c'est-à-dire légèrement bombé vers l'intérieur) au voisinage de l'épaule **3**, et plus précisément au voisinage de l'articulation **9** externe (et donc de la crête **15** en position rétractée). Cela favorise la tenue en compression du récipient **1** sous-jacent.

## Revendications

1. Récipient (**1**) obtenu par soufflage ou étirage soufflage à partir d'une ébauche en matière plastique, qui comprend un corps (**2**), une épaule (**3**) dans le prolongement du corps (**2**) à une extrémité supérieure de celui-ci, et un col (**4**) dans le prolongement de l'épaule (**3**), l'épaule (**3**) étant articulée entre deux positions stables, à savoir une position déployée dans laquelle l'épaule (**3**) fait saillie du corps (**2**), et une position rétractée dans laquelle l'épaule (**3**) est au moins partiellement rentrée dans le corps (**2**), l'épaule (**3**) étant articulée pour pouvoir adopter, outre la position déployée et la position rétractée, une troisième position stable, intermédiaire entre la position déployée et la position rétractée, l'épaule (**3**) comprenant une section (**8**) périphérique et une section (**11**) centrale, une première articulation (**9**) étant définie à une jonction entre la section (**8**) périphérique et le corps (**2**), une deuxième articulation (**10**) étant définie à une jonction entre la section (**8**) périphérique et la section (**11**) centrale, une troisième articulation (**12**) étant définie par la jonction entre la section (**11**) centrale et une section (**7**) sous col, ce récipient (**1**) étant **caractérisé en ce que** la section (**8**) périphérique et le corps (**2**) définissent à leur jonction, dans la position rétractée ou dans la position intermédiaire, une crête (**15**) en saillie axiale, le fond du récipient comprenant en son centre une voûte (**16**) définissant une réserve en creux et à sa périphérie un décroché (**17**) complémentaire de la crête (**15**).

2. Récipient (**1**) selon la revendication 1, **caractérisé en ce que** :
- en position intermédiaire, la section (**8**) périphérique et la section (**11**) centrale s'étendent respectivement en déclinaison et en inclinaison,
- en position rétractée, la section (**8**) périphérique et la section (**11**) centrale s'étendent en déclinaison,
- en position déployée, la section (**8**) périphérique et la section (**11**) centrale s'étendent en inclinaison.

3. Récipient (**1**) selon la revendication 1 ou la revendication 2, **caractérisé en ce que** :
- en position rétractée, le col (**4**) ne dépasse pas de la crête (**15**) ou en dépasse partiellement,
- en position intermédiaire, le col (**4**) dépasse complètement de la crête (**15**).

4. Récipient (**1**) selon la revendication 3, **caractérisé en ce que**, en position rétractée, le col (**4**) dépasse partiellement de la crête (**15**) et la voute (**16**) présente une forme et des dimensions telles que, lorsque deux récipients (**1**) sont empilés, ladite réserve est susceptible d'accueillir la partie de col qui dépasse partiellement de la crête (**15**) du récipient sous-jacent lorsque son épaule est dans ladite position rétractée.

5. Récipient (**1**) selon l'une des revendications précédentes, **caractérisé en ce que** le corps (**2**) est cintré au voisinage de l'épaule (**3**).

6. Récipient (**1**) selon l'une des revendications précédentes, **caractérisé en ce que** le corps (**2**) est muni d'au moins une zone (**13**) déformable.

7. Récipient (**1**) selon la revendication 6, **caractérisé en ce qu'**à l'exception de la zone ou des zones (**13**) déformable(s), le corps (**2**) est raidi.

8. Récipient (**1**) selon la revendication 7, **caractérisé en ce que** le corps (**2**) présente une superposition de raidisseurs (**14**) annulaires.

## Patentansprüche

1. Behälter (1), der durch Blasen oder Streckblasen ausgehend von einem Rohling aus Kunststoff erhalten wird und einen Körper (2), in der Verlängerung des Körpers (2) an seinem oberen Ende eine Schulter (3) und in der Verlängerung der Schulter (3) einen Hals (4) umfasst, wobei die Schulter (3) zwischen zwei stabilen Positionen angelenkt ist, nämlich einer ausgefahrenen Position, in der die Schulter (3) von dem Körper (2) vorsteht, und einer eingefahrenen Position, in der die Schulter (3) wenigstens teilweise in den Körper (2) zurückgezogen ist, wobei die Schulter (3) angelenkt ist, um außer der ausgefahrenen Position und der eingefahrenen Position eine dritte stabile Position einnehmen zu können, die sich zwischen der ausgefahrenen Position und der eingefahrenen Position befindet, wobei die Schulter (3) einen Umfangsabschnitt (8) und einen Mittelabschnitt (11) umfasst, wobei ein erstes Gelenk (9) an einem Übergang zwischen dem Umfangsabschnitt (8) und dem Körper (2) definiert ist, ein zweites Gelenk (10) an einem Übergang zwischen dem Umfangsabschnitt (8) und dem Mittelabschnitt (11) definiert ist und ein drittes Gelenk (12) durch den Übergang zwischen dem Mittelabschnitt (11) und einem Abschnitt (7) unterhalb des Halses definiert ist, wobei dieser Behälter (1) **dadurch gekennzeichnet ist, dass** der Umfangsabschnitt (8) und der Körper (2) an ihrem Übergang in der eingefahrenen Position oder in der Zwischenposition einen axial vorstehenden Grat (15) definieren, wobei der Boden des Behälters in seiner Mitte eine Wölbung (16) aufweist, die einen hohlen Raum definiert, und an seinem Umfang einen zu dem Grat (15) komplementären Rücksprung (17) aufweist.

2. Behälter (1) nach Anspruch 1, **dadurch gekennzeichnet, dass**:
- in der Zwischenposition der Umfangsabschnitt (8) und der Mittelabschnitt (11) abfallend bzw. ansteigend verlaufen,
- in der eingefahrenen Position der Umfangsabschnitt (8) und der Mittelabschnitt (11) abfallend verlaufen und
- in der ausgefahrenen Position der Umfangsabschnitt (8) und der Mittelabschnitt (11) ansteigend verlaufen.

3. Behälter (1) nach Anspruch 1 oder Anspruch 2, **dadurch gekennzeichnet, dass**:
- in der eingefahrenen Position der Hals (4) den Grat (15) nicht übersteigt oder teilweise übersteigt,
- in der Zwischenposition der Hals (4) den Grat (15) vollständig übersteigt.

4. Behälter (1) nach Anspruch 3, **dadurch gekennzeichnet, dass** in der eingefahrenen Position der Hals (4) den Grat (15) teilweise übersteigt und die Wölbung (16) eine Form und Abmessungen aufweist, derart, dass dann, wenn zwei Behälter (1) gestapelt sind, der Raum den Teil des Halses aufnehmen kann, der den Grat (15) des darunter befindlichen Behälters teilweise übersteigt, wenn seine Schulter in der eingefahrenen Position ist.

5. Behälter (1) nach einem der vorhergehenden Ansprüche, **dadurch gekennzeichnet, dass** der Körper (2) in der Umgebung der Schulter (3) umgebogen ist.

6. Behälter (1) nach einem der vorhergehenden Ansprüche, **dadurch gekennzeichnet, dass** der Körper (2) mit wenigstens einer verformbaren Zone (13) versehen ist.

7. Behälter (1) nach Anspruch 6, **dadurch gekennzeichnet, dass** der Körper (2) mit Ausnahme der einen oder der mehreren verformbaren Zonen (13) steif ist.

8. Behälter (1) nach Anspruch 7, **dadurch gekennzeichnet, dass** der Körper (2) eine Überlagerung ringförmiger Versteifungen (14) aufweist.

## Claims

1. Container (1) obtained by blow-moulding or stretch-blow-moulding from a blank made of plastic, which comprises a body (2), a shoulder (3) in the continuation of the body (2) at an upper end of the latter, and a neck (4) in the continuation of the shoulder (3), the shoulder (3) being articulated between two stable positions, these being a deployed position in which the shoulder (3) projects from the body (2) and a retracted position in which the shoulder (3) is at least partially depressed within the body (2), the shoulder (3) being articulated so as to be able to adopt, in addition to the deployed position and the retracted position, a third stable position that is intermediate between the deployed position and the retracted position, the shoulder (3) comprising a peripheral section (8) and a central section (11), a first articulation (9) being defined at a join between the peripheral section (8) and the body (2), a second articulation (10) being defined at a join between the peripheral section (8) and the central section (11), a third articulation (12) being defined by the join between the central section (11) and a section (7) below the neck, this container (1) being **characterized in that** the peripheral section (8) and the body (2) define, at the point where they meet, whether in the retracted position or in the intermediate position, an axially projecting ridge (15), the bottom of the container comprising, at its centre, a vault (16) that defines a hollow recess and, at its periphery, a setback (17) that is complementary with the ridge (15).

2. Container (1) according to Claim 1, **characterized in that**:
- in the intermediate position, the peripheral section (8) and the central section (11) are respectively oriented downwards and upwards,
- in the retracted position, the peripheral section (8) and the central section (11) are both oriented downwards,
- in the deployed position, the peripheral section (8) and the central section (11) are both oriented upwards.

3. Container (1) according to Claim 1 or Claim 2, **characterized in that**:
- in the retracted position, the neck (4) projects beyond the ridge (15) only partially or not at all,
- in the intermediate position, the neck (4) projects fully beyond the ridge (15).

4. Container (1) according to Claim 3, **characterized in that**, in the retracted position, the neck (4) projects partially beyond the ridge (15) and the shape and dimensions of the vault (16) are such that, when two containers (1) are stacked, said recess is able to receive that part of the neck which projects partially beyond the ridge (15) of the lower container when its shoulder is in said retracted position.

5. Container (1) according to one of the preceding claims, **characterized in that** the body (2) is curved in the vicinity of the shoulder (3).

6. Container (1) according to one of the preceding claims, **characterized in that** the body (2) is provided with at least one deformable region (13).

7. Container (1) according to Claim 6, **characterized in that**, with the exception of the deformable zone or zones (13), the body (2) is stiffened.

8. Container (1) according to Claim 7, **characterized in that** the body (2) has a superposition of annular stiffeners (14).
